# EUROPÄISCHE PATENTSCHRIFT

(11) **EP 2 638 316 B1**
(45) Veröffentlichungstag und Bekanntmachung des Hinweises auf die Patenterteilung: **08.09.2021**
(21) Anmeldenummer: 11757649.6
(22) Anmeldetag: 19.09.2011
(51) Int. Cl.: F16L 23/032, F16L 23/028, F16L 23/22, F16L 27/053, F16L 27/06

(54) **ROHRVERBINDUNG**
PIPE CONNECTION
RACCORDEMENT DE TUBE

(30) Priorität: 08.11.2010 DE 102010050720
(43) Veröffentlichungstag der Anmeldung: 18.09.2013
(73) Patentinhaber: De Dietrich Process Systems GmbH, 55122 Mainz (DE)
(72) Erfinder: DIETL, Steffen, 55546 Hackenheim (DE)
(74) Vertreter: Friese Goeden Patentanwälte PartGmbB
(86) Internationale Anmeldenummer: PCT/EP2011/066243
(87) Internationale Veröffentlichungsnummer: WO 2012/062503

(56) Entgegenhaltungen:
- DE-A1- 3 116 558
- FR-A1- 2 673 995
- US-A- 3 147 014

## Beschreibung

Die Erfindung betrifft eine Rohrverbindung zum Verbinden von zwei Rohrleitungen, wobei ein Rohrende einen Flanschteil mit einer kugelig-konvexen Dichtfläche aufweist und ein anderes Rohrende einen Flanschteil mit einer Pfanne aufweist, wobei zwischen der kugelig-konvexen Dichtfläche und der Pfanne ein ringförmiges Dichtelement angeordnet ist. Rohrleitungen und Dichtelemente der eingangs genannten Art können beispielsweise in der chemischen Verfahrenstechnik und/oder in der Pharmaindustrie zum Transport gasförmiger oder flüssiger Medien eingesetzt werden.

Aus der Praxis sind Rohrleitungen bekannt, welche an zumindest einem Ende einen Dichtflansch aufweisen, so dass eine Mehrzahl von Rohrleitungen durch zugeordnete Verbindungselemente zusammengefügt werden können. Um die Dichtigkeit der Verbindungsstelle zu gewährleisten, kann ein Dichtelement aus einem elastischen Material zwischen die Dichtflansche der Rohrleitungen eingelegt werden.

Aus der DE 31 16 558 A1 ist eine Verbindung von Rohrleitungen oder Rohranschlüssen bekannt. Die Rohrleitungen bestehen insbesondere aus Glas und weisen jeweils Flansche auf, zwischen denen eine Dichtung angeordnet ist. Die Stirnfläche einer der beiden Flansche weist eine zur Mittelachse des Flansches konzentrische Ringnut auf,in welche ein damit korrespondierender, mindestens einseitig aus der Dichtung vorstehender Wulst eingreift.

Die bekannten Rohrverbindungen weisen jedoch den Nachteil auf, dass das Dichtungselement aus der Trennstelle herausrutschen kann, so dass Leckagen entstehen. Dadurch wird der Montageaufwand vergrößert. Weiterhin können bei Betrieb der die Rohrleitungen enthaltenden Anlage flüssige oder gasförmige toxische Medien austreten und eine Gefahr für die Benutzer der Anlage darstellen.

Der Erfindung liegt daher die Aufgabe zugrunde, eine Rohrverbindung zu schaffen, welche einfach und zuverlässig montierbar ist und einen sicheren Betrieb ermöglicht.

Die Aufgabe wird erfindungsgemäß durch eine Rohrverbindung gemäß Anspruch 1 gelöst.

Erfindungsgemäß wird vorgeschlagen, dass zwei Rohrleitungen mit einer Kugel/Pfanne-Verbindung fluiddicht miteinander verbunden werden. Die Pfanne weist dabei eine Dichtfläche auf, welche nach innen geneigt ist, so dass die Kugel darin aufgenommen werden kann. Erfindungsgemäß wurde nun erkannt, dass die Zuverlässigkeit der Abdichtung erhöht werden kann, wenn die Dichtfläche der Pfanne in Umfangsrichtung in eine innere Dichtfläche und eine äußere Dichtfläche unterteilt ist. An der Grenzlinie zwischen der inneren und der äußeren Dichtfläche ist eine Stufe ausgebildet, welche formschlüssig mit dem Dichtelement zusammenwirken kann und dieses somit am Herausrutschen hindert. In den Ausführungsformen der Erfindung bewirkt die Stufe weiterhin eine mechanische Verstärkung bzw. Stabilisierung der Pfanne.

Das erfindungsgemäße Dichtelement weist eine toroidale Grundform auf. Dadurch kann das Dichtelement entlang dem Umfang der Pfanne eingelegt werden, ohne den Durchfluss zu behindern. Der Querschnitt weist eine erste Anlagefläche auf, welche außen an der Rohrleitung bzw. der Pfanne anliegt und das Dichtelement zentriert sowie am Verrutschen während der Montage hindert. Die zweite Anlagefläche des Dichtelementes ist dazu vorgesehen, an zumindest einer Dichtfläche der Pfanne anzuliegen, so dass ein dichtender Anschluss zweier Rohrleitungen hergestellt werden kann. Da das Dichtelement aus einem elastischen Material gefertigt ist, kann es sich der Form der zweiteiligen Dichtfläche der Pfanne anpassen, so dass ein Formschluss zwischen der in der Dichtfläche angeordneten Stufe und dem Dichtelement ermöglicht werden kann.

In einigen Ausführungsformen der Erfindung kann die innere Dichtfläche der Pfanne einen Krümmungsradius von etwa 70 mm bis etwa 90 mm aufweisen. In einigen Ausführungsformen der Erfindung kann der Krümmungsradius der inneren Dichtfläche 80 mm betragen. Durch eine solche Krümmung der Dichtfläche wird eine zur Kugel der zweiten Rohrleitung komplementäre Kontur der Dichtfläche geschaffen, so dass die Rohrleitungen auch dann dichtend miteinander verbunden werden können, wenn diese leicht verkippt zueinander eingebaut werden. Auf diese Weise wird die Montage erleichtert und die Zuverlässigkeit erhöht.

Gemäß der Erfindung weist die äußere Dichtfläche einen geringeren Krümmungsradius auf als die innere Dichtfläche. In einigen Ausführungsformen der Erfindung kann der Krümmungsradius der inneren Dichtfläche etwa 77 mm betragen. Durch diese Geometrie entsteht ein sichelförmiger Spalt, der das Herausrutschen der Dichtung verhindert.

In einem Längsabschnitt, welcher die Pfanne aufnimmt bzw. die Außenkontur der Pfanne bildet, kann in einigen Ausführungsformen der vorgeschlagenen Rohrleitung eine äußere Anlagefläche ausgebildet sein, an welche eine Schelle anlegbar ist. Mittels einer solchen außen anliegenden Schelle kann durch Verschrauben oder Verspannen eine kraftschlüssige Verbindung zweier Rohrleitungen hergestellt und/oder eine axiale Vorspannung auf die Verbindungsstelle zweier Rohrleitungen aufgebracht werden. Die axiale Vorspannung kann einerseits die Kugel in die Pfanne drücken und dabei ein Dichtelement komprimieren, so dass eine fluiddichte Verbindung der Rohrenden erhalten wird. Darüber hinaus kann die mechanische Befestigung dazu dienen, die beiden Rohrenden fest miteinander zu verbinden und die mechanische Stabilität der die Rohrleitungen enthaltenden Apparatur sicherstellen.

In einigen Ausführungsformen der Erfindung kann die mittlere Neigung der inneren Dichtfläche und/oder der äußeren Dichtfläche gegen die Längsachse der Rohrleitung etwa 68° bis etwa 78° betragen. Unter der mittleren Neigung einer gekrümmten Dichtfläche wird dabei die mittlere Neigung der Tangenten an die Oberfläche der Dichtfläche verstanden. Der angegebene Winkelbereich erlaubt eine dichtende Verbindung mit geringer axialer Vorspannung. Weiterhin bleibt die Dichtwirkung auch dann erhalten, wenn die beiden aneinander grenzenden Rohrleitungen um einige Grad verkippt sind.

In einigen Ausführungen können zumindest die innere Dichtfläche und/oder die äußere Dichtfläche feuerpoliert sein. Unter einer Feuerpolitur wird für die Zwecke dieser Beschreibung verstanden, dass die Oberfläche bzw. eine oberflächennahe Schicht bis zum Schmelzpunkt erhitzt wird, so dass durch das Aufweichen der Glasoberfläche die bis dahin raue Oberflächenstruktur glatt verschmolzen werden kann und vorhandene Kanten abgerundet werden können. Hierzu kann die Rohrleitung oder die Pfanne in einigen Ausführungsformen der Erfindung ein Glas oder eine Glaskeramik enthalten oder daraus bestehen.

Das in der Erfindung zur Abdichtung verwendete Dichtelement kann einen Gummi enthalten oder daraus bestehen. In einigen Ausführungsformen der Erfindung kann das Dichtelement Gummi Ethylen-Propylen-Dien-Kautschuk oder Fluorkautschuk enthalten. Dabei kann der Fluorkautschuk ausgewählt sein aus Polymeren, welche als gemeinsames Merkmal Vinyliden(di)fluorid als eines ihrer Monomere besitzen. In anderen Ausführungsformen der Erfindung kann das Dichtelement Polytetrafluorethylen enthalten oder daraus bestehen. Dadurch können die chemische Beständigkeit und die Einsatztemperatur erhöht sein. Die Einsatztemperatur kann mehr als 400 K oder mehr als 450 K oder mehr als 500 K betragen.

Gemäß der Erfindung ist auf der Oberseite der zweiten Anlagefläche eine erhabene Teilfläche ausgebildet. Diese ermöglicht eine vergrößere mechanische Stabilität des Dichtelementes sowie eine zuverlässigere Abdichtung.

Gemäß der Erfindung ist auf der Unterseite der zweiten Anlagefläche eine erhabene Teilfläche ausgebildet Gemäß der Erfindung ist somit sowohl auf der Ober- als auch auf der Unterseite der zweiten Anlagefläche des Dichtelementes eine erhabene Teilfläche ausgebildet. Hierdurch kann die Dichtwirkung beiderseits der zweiten Anlagefläche erhöht und das Verrutschen des Dichtelementes auf der Dichtfläche weiter verhindert werden, so dass die Verbindung zuverlässig auch bei geringer axialer Vorspannung hergestellt werden kann.

In einigen Ausführungsformen der Erfindung können die erste Anlagefläche und die zweite Anlagefläche des Dichtelementes einen Winkel von etwa 68° bis etwa 78° einschließen. Somit kann das Dichtelement komplementär zur Pfanne einer Rohrleitung geformt sein, so dass das Dichtelement zur Montage spannungsfrei in die Pfanne der Rohrleitung eingelegt werden kann. Auf diese Weise wird ein Herausspringen des Dichtelementes aus der Pfanne während der Montage vermieden und die Montage der Rohrverbindung wird vereinfacht.

Nachfolgend soll die Erfindung anhand von Figuren ohne Beschränkung des allgemeinen Erfindungsgedankens näher erläutert werden. Dabei zeigt:
- Figur 1: einen Querschnitt durch eine erfindungsgemäße Rohrleitung,
- Figur 2: eine vergrößerte Darstellung der Pfanne,
- Figur 3: die vergrößerte Darstellung der zwischen der ersten und zweiten Dichtfläche angeordneten Stufe,
- Figur 4: eine bekannte Rohrverbindung,
- Figur 5: eine erfindungsgemäße Rohrverbindung,
- Figur 6: einen Querschnitt durch ein erfindungsgemäßes Dichtelement.

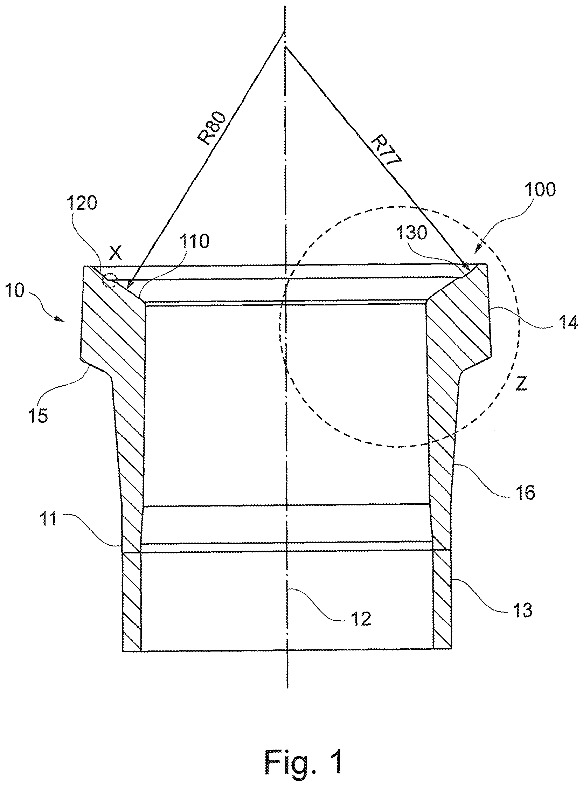

Figur 1 zeigt einen Querschnitt durch das Ende einer Rohrleitung. Bei dem in Figur 1 gezeigten Querschnitt kann es sich um das Ende einer geraden oder gekrümmten Rohrleitung handeln oder um einen einzelnen Anschluss eines T-Stückes, eines Y-Stückes, eines 4-fach-Kreuzes, eines 6-fach-Kreuzes oder eines anderen, an sich bekannten Bauteiles zur Konstruktion von Leitungsnetzen.

Die Rohrleitung 10 weist einen Längsabschnitt 13 auf, welcher eine im Wesentlichen konstante Wandstärke und eine parallele Außenkontur aufweist. Der Längsabschnitt 13 dient entweder dem geradlinigen Transport eines im Inneren der Rohrleitung 10 strömenden Fluids oder vermittelt den Anschluss des in Figur 1 dargestellten Endes der Rohrleitung an eines der vorstehend beschriebenen Rohrleitungselemente.

Der erste Längsabschnitt 13 geht mit einem zweiten Längsabschnitt 16 in die Pfanne 100 über. Die Innenwandung und/oder die Außenwandung des zweiten Längsabschnittes 16 kann gegenüber dem ersten Längsabschnitt 13 um wenige Grad nach außen geneigt sein. Dadurch ergibt sich eine Aufweitung des Rohrquerschnittes. Die Aufweitung kann an der Innenseite der Rohrleitung etwa 1° bis etwa 5° betragen. An der Außenseite 11 der Rohrleitung 10 kann der Längsabschnitt 16 eine stärkere Aufweitung von etwa 3° bis etwa 10° erfahren, so dass die Wandstärke des zweiten Längsabschnittes 16 größer ist als die Wandstärke des ersten Längsabschnittes 13. Auf diese Weise kann die mechanische Stabilität der Pfanne 100 vergrößert werden.

An den zweiten Längsabschnitt 16 kann sich ein dritter Längsabschnitt 14 anschließen. Der dritte Längsabschnitt 14 kann einen gegenüber dem zweiten Längsabschnitt 16 weiter vergrößerten Außendurchmesser aufweisen, so dass sich zwischen dem zweiten Längsabschnitt 16 und dem dritten Längsabschnitt 14 eine äußere Anlagefläche 15 ausbildet. Über die äußere Anlagefläche 15 kann ein mechanisches Befestigungselement angreifen, so dass eine axiale Vorspannung auf die Rohrverbindung ausgeübt werden kann. Die äußere Anlagefläche 15 kann gegenüber der Längsachse 12 der Rohrleitung einen Neigungswinkel von weniger als 90° einschließen, so dass die über die äußere Anlagefläche 15 eingebrachte Vorspannung eine axiale und eine radiale Komponente in Richtung auf die Längsachse 12 auf die Rohrleitung 10 ausübt. In einigen Ausführungsformen der Erfindung kann die äußere Anlagefläche 15 gekrümmt sein.

Am Ende des dritten Längsabschnittes 14 ist eine Pfanne 100 als Teil eines Verbindungssystems ausgebildet. Die Pfanne 100 dient zur Aufnahme einer Kugel mit komplementärer Außenform, welche an einer nicht dargestellten zweiten Rohrleitung angeformt ist.

Die Pfanne 100 weist eine innere Dichtfläche 110 sowie eine äußere Dichtfläche 120 auf. Beide Dichtflächen sind nach innen geneigt, d.h. in Richtung auf die Längsachse 12 der Rohrleitung 10. Die Neigung beträgt etwa 68 bis etwa 78°.

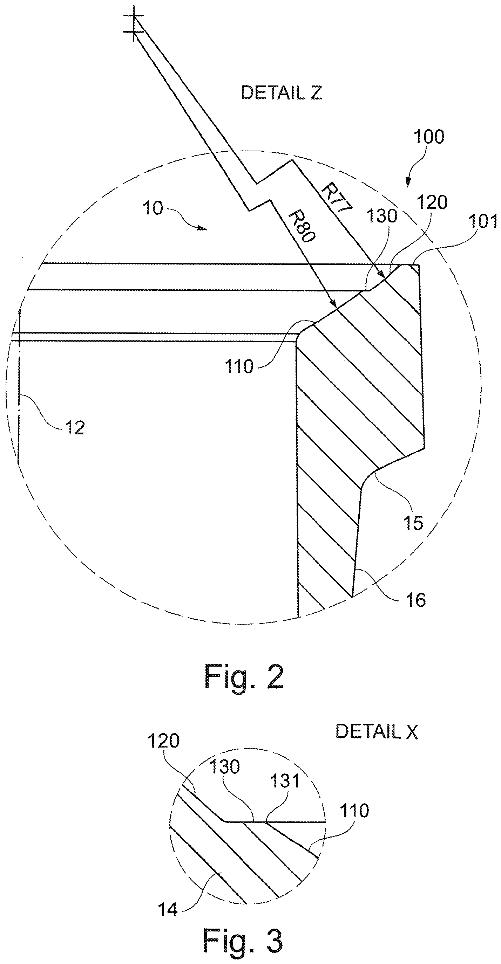

Wie in der vergrößerten Darstellung der Figur 2 ersichtlich ist, sind die innere Dichtfläche 110 und die äußere Dichtfläche 120 in der dargestellten Ausführungsform nicht eben ausgeführt. Vielmehr weist die innere Dichtfläche 110 eine Krümmung von etwa 80 mm auf. Die äußere Dichtfläche 120 weist eine geringere Krümmung von etwa 77 mm auf. Zwischen der inneren Dichtfläche 110 und der äußeren Dichtfläche 120 ist eine Stufe 130 ausgebildet. Die Stufe 130 bewirkt eine vergrößerte mechanische Stabilität der Pfanne 100. Weiterhin verhindert die Stufe 130 das Verrutschen eines in die Pfanne 100 eingelegten Dichtelementes, so dass die Montage einer Rohrverbindung zweier Rohrleitungen 10 erleichtert ist.

Die Ausbildung der Stufe 130 ist in Figur 3 nochmals vergrößert dargestellt. Figur 3 zeigt einen Ausschnitt aus dem dritten Längsabschnitt 14 der Rohrleitung 10 im Bereich der inneren Dichtfläche 110 und der äußeren Dichtfläche 120. In Figur 3 ist ersichtlich, dass die innere und die äußere Dichtfläche 110 und 120 in Richtung der Längsachse 12 der Rohrleitung 10 geneigt sind, wie vorstehend beschrieben. Die Stufe 130 ist demgegenüber nahezu eben ausgeführt, d.h. rechtwinklig zur Längsachse 12. Die Stufe 130 kann in einigen Ausführungsformen der Erfindung etwa 2 mm bis etwa 6 mm von der Stirnseite 101 der Pfanne 100 nach innen versetzt angeordnet sein. Am Übergang der Stufe 130 in die innere Dichtfläche 110 bildet sich eine umlaufende Kante 131 aus. Die Kante 131 erzeugt unter der Einwirkung einer axialen Vorspannkraft eine lokale Spannungsspitze im elastischen Dichtelement, so dass dieses formschlüssig auf den Dichtflächen 110 und 120 gehalten wird. Weiterhin wird durch die Spannungsspitze an der Kante 131 eine zuverlässige Abdichtung auch gegen gasförmige Fluide erreicht.

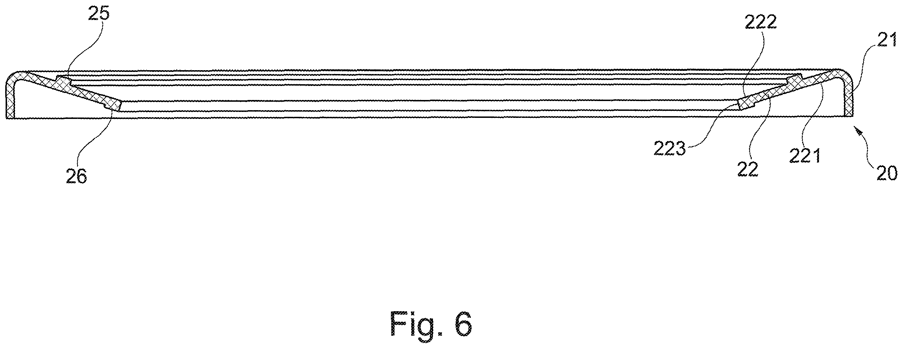

Figur 6 zeigt ein Dichtelement, welches in Verbindung mit der in den Figuren 1 bis 3 dargestellten Rohrleitung verwendbar ist. Das Dichtelement gemäß Figur 6 weist eine toroidale Grundform auf. Somit kann das Dichtelement in die Pfanne 110 eingelegt werden, ohne dass der freie Querschnitt der Rohrleitung 10 durch die Anwesenheit des Dichtelementes 20 behindert wird.

Der Querschnitt des Dichtelementes weist eine erste Anlagefläche 21 und eine zweite Anlagefläche 22 auf. Die zweite Anlagefläche 22 weist eine Unterseite 221 sowie eine Oberseite 222 auf. Die Unterseite 221 ist dazu vorgesehen, mit der inneren Dichtfläche 110 und der äußeren Dichtfläche 120 der Pfanne 100 einer Rohrleitung in Kontakt zu stehen. Die Oberseite 222 der zweiten Anlagefläche 22 steht dementsprechend mit einer Kugel 160 in Kontakt, welche an einer zweiten Rohrleitung 10 angeformt ist.

Zur mechanischen Stabilisierung und/oder zur verbesserten Abdichtung der Rohrverbindung ist an der Oberseite 222 der zweiten Anlagefläche 22 eine erhabene Teilfläche 25 ausgebildet. Die erhabene Teilfläche 25 kann eine Breite von etwa 1 mm bis etwa 5 mm aufweisen. Die Teilfläche 25 kann gegenüber der Oberseite 222 der zweiten Anlagefläche 22 etwa 0,5 bis etwa 1,5 mm erhaben sein. Die Innenkante der Teilfläche 25 kann etwa 3 mm bis etwa 10 mm von der Innenkante der zweiten Anlagefläche 22 entfernt angeordnet sein. Die erhabene Teilfläche 25 ist umlaufend im gesamten Querschnitt des Dichtelementes 20 vorgesehen.

In vergleichbarer Weise ist auf der Unterseite 221 der zweiten Anlagefläche 22 eine erhabene Teilfläche 26 ausgebildet. Die erhabene Teilfläche 26 kann in einigen Ausführungsformen unmittelbar an die Innenkante 223 der zweiten Anlagefläche 22 angrenzen. Die Teilfläche 26 kann eine Breite von etwa 1 mm bis etwa 5 mm aufweisen und in einigen Ausführungsformen 0,2 bis 1 mm über das Niveau der Unterseite 221 der zweiten Anlagefläche hinausragen.

Die erste Anlagefläche 21 ist dazu vorgesehen, an der Außenseite des dritten Längsabschnittes 14 anzuliegen, so dass das Dichtelement 20 daran gehindert wird, in der Pfanne 100 zu verrutschen. Auf diese Weise ist eine einfache Zentrierung des Dichtelementes 20 und eine rasche Montage der Rohrverbindung möglich.

In einigen Ausführungsformen der Erfindung schließen die erste Anlagefläche 21 und die zweite Anlagefläche 22 einen Winkel von etwa 68 bis etwa 78° ein. Der Winkel kann an den mittleren Neigungswinkel der Pfanne 100 angepasst sein, so dass eine spannungsfreie Montage des Dichtelementes auf der Rohrleitung 10 ermöglicht wird. Da das Dichtelement vollständig aus einem elastischen Material gefertigt ist, kann der von der ersten Anlagefläche 21 und der zweiten Anlagefläche 22 eingeschlossene Winkel variabel sein, so dass das Dichtelement 20 universell auch für bereits bekannte Flanschverbindungen einsetzbar ist. Das Dichtelement kann in einigen Ausführungsformen einstückig hergestellt sein, beispielsweise durch Formpressen.

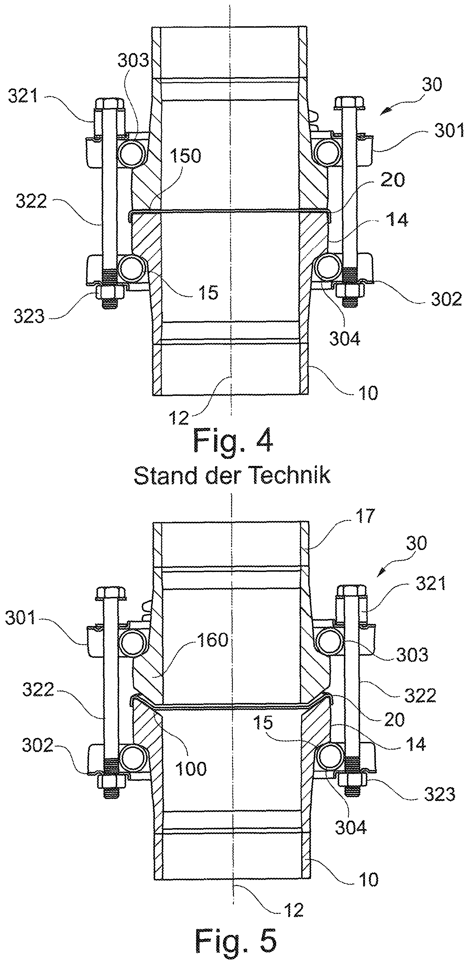

Eine bekannte Rohrverbindung zeigt Figur 4. Die Rohrverbindung gemäß Figur 4 verbindet zwei Rohrleitungen 10 miteinander. Die Rohrleitungen 10 weisen zu ihrem Ende hin einen Längsabschnitt 14 mit größerem Außendurchmesser auf, so dass sich zwischen der Rohrleitung 10 und dem Längsabschnitt 14 eine äußere Anlagefläche 15 ausbildet. Die Stirnseite des Längsabschnittes 14 bildet einen Flansch 150, welcher in etwa rechtwinklig zur Längsachse 12 der Rohrleitung 10 verläuft. Die den Flansch 150 bildende Stirnseite des Längsabschnittes 14 kann plan oder profiliert sein. Zwischen zwei Rohrleitungen 10 wird ein Dichtelement eingeführt, welches durch Beaufschlagen mit einer axialen Vorspannkraft komprimiert wird und auf diese Weise die Rohrverbindung fluiddicht abdichtet. Das Dichtelement 20 gemäß Figur 6 kann dabei universell auch an einer bekannten Rohrverbindung eingesetzt werden. Dabei liegt die erste Anlagefläche 21 an der Außenseite des Längsabschnittes 14 an. Aufgrund der elastischen Verbindung der ersten Anlagefläche 21 und der zweiten Anlagefläche 22 des Dichtelementes 20 passt sich diese an den Winkel des Flansches 150 an, so dass das Dichtelement 20 bei Beaufschlagen mit einer axialen Vorspannkraft in an sich bekannter Weise zur Abdichtung der Rohrverbindung dient.

Zum Erzeugen einer axialen Vorspannkraft ist eine erste Schelle 301 und eine zweite Schelle 302 vorgesehen, welche jeweils an einer Anlagefläche 15 der Rohrleitungen 10 angreifen. Zur Vermeidung von Spannungsspitzen, welche zum Bruch einer Rohrleitung 10 führen könnten, kann ein optionales elastisches Element 303 und 304 eingesetzt werden, welches den Kontakt zwischen der Anlagefläche und der Schelle vermittelt. Die elastischen Elemente 303 und 304 können beispielsweise die Form eines Schlauches oder einer Rundschnur aufweisen und aus einem elastischen Kunststoffmaterial gefertigt sein, wie beispielsweise EPDM, PTFE, FPM oder andere, an sich bekannte Materialien.

Die Schellen 301 und 302 dienen zum Übertragen einer axialen Vorspannkraft auf die Rohrleitungen 10. Zum Erzeugen dieser axialen Vorspannkraft stehen Schrauben 322 zur Verfügung, welche entlang des Umfangs der Schellen 301 verteilt und mittels Durchgangsbohrungen mit den Schellen 301 und 302 verbunden sind. Zum Erzeugen der Vorspannkraft ist jede der Schrauben 322 mit einer Mutter 323 versehen, so dass der Abstand zwischen den Schellen 301 und 302 variierbar ist. Fallweise können in einigen Ausführungsformen der Erfindung Federelemente 321 vorgesehen sein, welche die axiale Vorspannkraft definieren und begrenzen.

Figur 5 zeigt eine erfindungsgemäß vorgeschlagene Rohrverbindung. Im unteren Bildteil ist eine Rohrleitung 10 dargestellt, welche bereits anhand der Figuren 1 bis 3 näher erläutert wurde. Die Rohrleitung 10 läuft am Ende in eine Pfanne 100 aus, welche in Richtung des Innenraumes der Rohrleitung 10 geneigt ist. Die zweite Rohrleitung 17 läuft an ihrem Ende in der Kugel 160 aus, die den gleichen Radius wie die innere Dichtfläche 110, also etwa 80 mm, hat.

Zur Montage der Rohrverbindung kann das Dichtelement 20, wie in Figur 6 dargestellt, auf die Rohrleitung 10 aufgesteckt werden, so dass die erste Anlagefläche 21 an der Außenseite des dritten Längsabschnittes 14 anliegt und die zweite Anlagefläche 22 an den Dichtflächen 110 und 120 der Pfanne 100 anliegt.

Sodann wird die Kugel 160 in die Pfanne 100 eingeführt, so dass die Dichtflächen der Kugel 160 an der Oberseite 222 der zweiten Anlagefläche 22 anliegen. Zur endgültigen mechanischen Fixierung der Rohrverbindung und zum Abdichten dient eine axiale Vorspannkraft, welche über zwei Schellen 301 und 302 aufgebracht wird. Die Schellen stehen über elastische Elemente 303 und 304 mit den Rohrleitungen 10 und 17 in Eingriff, wie bereits anhand von Figur 4 beschrieben. Zum Erzeugen der axialen Vorspannkraft dienen wiederum Schraubverbindungen 322 und 323, welche über optionale Federelemente 321 an den Schellen 301 und 302 angreifen.

Durch die konvexe Form der Kugel 160 und die konkave Form der Pfanne 100 kann eine leichte Fehlausrichtung ausgeglichen werden, so dass die Rohrverbindung auch bei einer verkippten Montage noch dicht bleibt und die Rohrleitungen 10 und 17 durch die axiale Vorspannkraft nicht beschädigt werden. Dadurch wird der Montagevorgang erleichtert, so dass die Montage schnell und zuverlässig vorgenommen werden kann.

## Patentansprüche

1. Rohrverbindung zum Verbinden von zwei Rohrleitungen (10), wobei die Rohrverbindung ein Rohrende mit einem Flanschteil mit einer kugelig-konvexen Dichtfläche und ein anderes Rohrende mit einem Flanschteil mit einer Pfanne (100) aufweist, wobei die Pfanne (100) eine innere, nach innen in Richtung auf eine Längsachse (12) geneigte Dichtfläche (110), eine äußere, nach innen in Richtung auf die Längsachse (12) geneigte Dichtfläche (120), eine Stufe (130) zwischen der äußeren und der inneren Dichtfläche (120, 110) und eine umlaufende Kante (131) am Übergang der Stufe (130) in die innere Dichtfläche aufweist, wobei zwischen der kugelig-konvexen Dichtfläche und der Pfanne (100) ein aus einem elastischen Material bestehendes, ringförmiges Dichtelement (20) angeordnet und durch eine auf die Rohrenden einwirkende axiale Vorspannkraft komprimiert ist, wobei das Dichtelement (20) mit einer Oberseite (222) an der kugelig-konvexen Dichtfläche und mit einer Unterseite (221) an der äußeren und der inneren Dichtfläche (120, 110) und der umlaufenden Kante (131) anliegt, wobei eine erhabene Teilfläche (25, 26) jeweils an der Oberseite (222) und an der Unterseite (221) des Dichtelementes (20) ausgebildet ist und die innere und die äußere Dichtfläche (110, 120) jeweils konkav gekrümmt sind, wobei die kugelig-konvexe Dichtfläche den gleichen Radius wie die innere Dichtfläche (110) hat,
**dadurch gekennzeichnet, dass**
die Stufe (130) eben und rechtwinklig zu der Längsachse (12) ist, die Kante (130) eine lokale Spannungsspitze in dem Dichtelement (20) erzeugt und die äußere Dichtfläche (120) einen geringeren Krümmungsradius als die innere Dichtfläche (110) hat, so dass zwischen der äußeren Dichtfläche (120) und der kugelig-konvexen Dichtfläche ein sichelförmiger Spaltausgebildet ist, der ein Herausrutschen des Dichtelementes (20) verhindert.

2. Rohrverbindung nach Anspruch 1, **dadurch gekennzeichnet, dass** die innere Dichtfläche (110) einen Krümmungsradius von etwa 70 mm bis etwa 90 mm aufweist.

3. Rohrverbindung nach Anspruch 2, **dadurch gekennzeichnet, dass** die innere Dichtfläche (110) einen Krümmungsradius von etwa 80 mm aufweist.

4. Rohrverbindung nach einem der Ansprüche 1 bis 3, **dadurch gekennzeichnet, dass** die äußere Dichtfläche (120) einen Krümmungsradius von etwa 77 mm aufweist.

5. Rohrverbindung nach einem der Ansprüche 1 bis 4, **dadurch gekennzeichnet, dass** die Außenseite (11) des anderen Rohrendes eine äußere Anlagefläche (15) aufweist, an welche eine Schelle (301, 302) angelegt ist.

6. Rohrverbindung nach einem der Ansprüche 1 bis 5, **dadurch gekennzeichnet, dass** zumindest die innere Dichtfläche (110) und/oder die äußere Dichtfläche (120) feuerpoliert sind.

7. Rohrverbindung nach einem der Ansprüche 1 bis 6, **dadurch gekennzeichnet, dass** die mittlere Neigung der inneren Dichtfläche (110) und/oder der äußeren Dichtfläche (120) gegen die Längsachse (12) der Rohrleitung (10) etwa 68° bis etwa 78° beträgt.

8. Rohrverbindung nach einem der vorhergehenden Ansprüche, **dadurch gekennzeichnet, dass** der Querschnitt des Dichtelements (20) einen ersten Anlageschenkel (21) und einen zweiten Anlageschenkel (22) aufweist, wobei der erste Anlageschenkel (21) an der Außenseite (14) des Flanschteils des anderen Rohrendes anliegt.

9. Rohrverbindung nach einem der vorhergehenden Ansprüche, **dadurch gekennzeichnet, dass** das Dichtelement (20) Polytetrafluorethylen enthält oder daraus besteht.

10. Rohrverbindung nach Anspruch 8 oder 9, **dadurch gekennzeichnet, dass** der erste Anlageschenkel (21) und der zweite Anlageschenkel (22) einen Winkel von etwa 68° bis etwa 78° einschließen.

## Claims

1. Pipe connection for connecting two pipelines (10), the pipe connection having one pipe end with a flange part having a spherical-convex sealing surface and another pipe end with a flange part having a socket (100), the socket (100) having an inner sealing surface (110) inclined inwardly towards a longitudinal axis (12), an outer sealing surface (120) inclined inwardly towards the longitudinal axis (12), a step (130) between the outer and the inner sealing surface (120, 110), and a circumferential edge (131) at the transition of the step (130) into the inner sealing surface, an annular sealing element (20) which consists of an elastic material being arranged between the spherical-convex sealing surface and the socket (100) and being compressed by an axial preload force acting on the pipe ends, the sealing element (20) bearing with an upper side (222) against the spherical-convex sealing surface and with a lower side (221) against the outer and the inner sealing surface (120, 110) and the circumferential edge (131), a raised partial surface (25, 26) being formed on the upper surface (222) and on the lower surface (221) of the sealing element (20), and the inner and the outer sealing surface (110, 120) being both concavely curved, the spherical-convex sealing surface having the same radius as the inner sealing surface (110),
**characterized in that**
the step (130) is planar and at right angles to the longitudinal axis (12), the edge (130) creates a local stress peak in the sealing element (20), and the outer sealing surface (120) has a smaller radius of curvature than the inner sealing surface (110), such that a crescent-shaped gap is formed between the outer sealing surface (120) and the spherical-convex sealing surface to prevent the sealing element (20) from slipping out.

2. Pipe connection according to claim 1, **characterized in that** the inner sealing surface (110) has a radius of curvature of about 70 mm to about 90 mm.

3. Pipe connection according to claim 2, **characterized in that** the inner sealing surface (110) has a radius of curvature of about 80 mm.

4. Pipe connection according to any of claims 1 to 3, **characterized in that** the outer sealing surface (120) has a radius of curvature of about 77 mm.

5. Pipe connection according to any of claims 1 to 4, **characterized in that** the outer side (11) of the other pipe end has an outer contact surface (15) against which a clamp (301, 302) bears.

6. Pipe connection according to any of claims 1 to 5, **characterized in that** at least the inner sealing surface (110) and/or the outer sealing surface (120) are fire-polished.

7. Pipe connection according to any of claims 1 to 6, **characterized in that** the average inclination of the inner sealing surface (110) and/or the outer sealing surface (120) against the longitudinal axis (12) of the pipeline (10) is about 68° to about 78°.

8. Pipe connection according to any of the preceding claims, **characterized in that** the cross-section of the sealing element (20) includes a first contact leg (21) and a second contact leg (22), the first contact leg (21) bearing against the outer side (14) of the flange part of the other pipe end.

9. Pipe connection according to any of the preceding claims, **characterized in that** the sealing element (20) contains or consists of polytetrafluoroethylene.

10. Pipe connection according to claim 8 or 9, **characterized in that** the first contact leg (21) and the second contact leg (22) enclose an angle of about 68° to about 78°.

## Revendications

1. Raccord de tube pour relier deux conduits tubulaires (10), le raccord de tube comprenant une extrémité de tube avec une partie de bride ayant une surface d'étanchéité sphérique-convexe et une autre extrémité de tube avec une partie de bride ayant une coupelle (100), la coupelle (100) ayant une surface d'étanchéité intérieure (110) inclinée vers l'intérieur en direction d'un axe longitudinal (12), une surface d'étanchéité extérieure (120) inclinée vers l'intérieur en direction de l'axe longitudinal (12), un gradin (130) entre les surfaces d'étanchéité extérieure et intérieure (120, 110), et un bord circonférentiel (131) à la transition du gradin (130) vers la surface d'étanchéité intérieure,
dans lequel
un élément d'étanchéité annulaire (20) constitué d'un matériau élastique est disposé entre la surface d'étanchéité sphérique-convexe et la coupelle (100) et est comprimé par une force de précontrainte axiale agissant sur les extrémités de tube,
l'élément d'étanchéité (20) s'appuie avec une face supérieure (222) contre la surface d'étanchéité sphérique-convexe et avec une face inférieure (221) contre les surfaces d'étanchéité extérieure et intérieure (120, 110) et contre le bord circonférentiel (131),
une surface partielle surélevée (25, 26) est formée sur la face supérieure (222) et sur la face inférieure (221) de l'élément d'étanchéité (20), respectivement, et
les surfaces d'étanchéité intérieure et extérieure (110, 120) sont chacune incurvées de manière concave, la surface d'étanchéité sphérique-convexe ayant le même rayon que la surface d'étanchéité intérieure (110),
**caractérisé en ce que**
le gradin (130) est plan et à angle droit par rapport à l'axe longitudinal (12), le bord (130) crée un pic de contrainte local dans l'élément d'étanchéité (20), et
la surface d'étanchéité extérieure (120) présente un rayon de courbure plus petit que la surface d'étanchéité intérieure (110), de sorte qu'un espace en forme de croissant est formé entre la surface d'étanchéité extérieure (120) et la surface d'étanchéité sphérique-convexe, espace qui empêche l'élément d'étanchéité (20) de s'échapper.

2. Raccord de tube selon la revendication 1,
**caractérisé en ce que** la surface d'étanchéité intérieure (110) présente un rayon de courbure d'environ 70 mm à environ 90 mm.

3. Raccord de tube selon la revendication 1 ou 2,
**caractérisé en ce que** la surface d'étanchéité intérieure (110) présente un rayon de courbure d'environ 80 mm.

4. Raccord de tube selon l'une des revendications 1 à 3,
**caractérisé en ce que** la surface d'étanchéité extérieure (120) présente un rayon de courbure d'environ 77 mm.

5. Raccord de tube selon l'une des revendications 1 à 4,
**caractérisé en ce que** la face extérieure (11) de l'autre extrémité de tube présente une surface d'appui extérieure (15) contre laquelle s'appuie un collier (301, 302).

6. Raccord de tube selon l'une des revendications 1 à 5,
**caractérisé en ce qu'**au moins la surface d'étanchéité intérieure (110) et/ou la surface d'étanchéité extérieure (120) sont polies au feu.

7. Raccord de tube selon l'une des revendications 1 à 6,
**caractérisé en ce que** l'inclinaison moyenne de la surface d'étanchéité intérieure (110) et/ou de la surface d'étanchéité extérieure (120) par rapport à l'axe longitudinal (12) du conduit tubulaire (10) est d'environ 68° à environ 78°.

8. Raccord de tube selon l'une des revendications précédentes,
**caractérisé en ce que** la section transversale de l'élément d'étanchéité (20) comprend une première branche d'appui (21) et une seconde branche d'appui (22), la première branche d'appui (21) étant en appui contre la face extérieure (14) de la partie de bride de l'autre extrémité de tube.

9. Raccord de tube selon l'une des revendications précédentes,
**caractérisé en ce que** l'élément d'étanchéité (20) comprend ou consiste en polytétrafl uoroéthylène.

10. Raccord de tube selon la revendication 8 ou 9,
**caractérisé en ce que** la première branche d'appui (21) et la seconde branche d'appui (22) forment un angle d'environ 68° à environ 78°.
